# EUROPÄISCHE PATENTSCHRIFT

(11) **EP 3 344 798 B1**
(45) Veröffentlichungstag und Bekanntmachung des Hinweises auf die Patenterteilung: **02.12.2020**
(21) Anmeldenummer: 16770893.2
(22) Anmeldetag: 01.09.2016
(51) Int. Cl.: C25D 5/02, C25D 5/56

(54) **VERFAHREN ZUR HERSTELLUNG EINES GALVANISCH DEKORIERTEN BAUTEILS**
METHOD FOR PRODUCING A GALVANICALLY DECORATED COMPONENT
PROCÉDÉ DE RÉALISATION D'UN ÉLÉMENT DÉCORÉ PAR GALVANISATION

(30) Priorität: 03.09.2015 DE 202015006095 U
(43) Veröffentlichungstag der Anmeldung: 11.07.2018
(73) Patentinhaber: Gerhardi Kunststofftechnik GmbH, 58511 Lüdenscheid (DE)
(72) Erfinder: KIESLICH, Dirk, 58840 Plettenberg (DE); HU, Binfeng, 58511 Lüdenscheid (DE)
(74) Vertreter: Patentanwälte Dörner & Kötter PartG mbB
(86) Internationale Anmeldenummer: PCT/EP2016/070578
(87) Internationale Veröffentlichungsnummer: WO 2017/037153

(56) Entgegenhaltungen:
- EP-A2- 1 188 560
- EP-A2- 1 219 417
- DE-A1-102006 042 269
- DE-A1-102011 104 018
- DE-C1- 4 330 961
- DE-U1-202013 009 793

## Beschreibung

Die Erfindung betrifft ein Verfahren zur Herstellung eines galvanisch dekorierten Bauteils mit einer in der Oberfläche durchleuchtbar gestalteten, eingebrachten Symbolik oder Struktur, bei dem das Bauteil aus einem galvanisierbaren Kunststoff im Spritzgießverfahren hergestellt wird und die Symbolik oder Struktur aus einem nicht galvanisierbaren, galvanikstabilen Druckbild hergestellt wird.

Bei den Bauteilen aus Kunststoff für die Automobilindustrie der hier betrachteten Art handelt es sich im Wesentlichen um Bedienelemente, mit denen verschiedene Funktionen des Fahrzeugs bedient werden können. Hierunter fallen beispielsweise Start/Stop-Knöpfe, Bedienelemente für die Fahrzeugbeleuchtung oder Klimaregulierung. Den genannten Bauteilen ist gemeinsam, dass sie eine Symbolik oder Wörter oder dergleichen aufweisen, die die jeweilige Funktion beschreiben. Diese Symbolik ist andersfarbig als das übrige Bedienelement ausgebildet. Anforderungen an die Symbolik sind beispielsweise die Kontrastschärfe im Vergleich zum Bedienelement selbst sowie die Hinterleuchtbarkeit.

Zur Erstellung der vorgenannten Bauteile aus Kunststoff sind verschiedene Verfahren bekannt. So basiert beispielsweise das PVD-Verfahren (Physical-Vapor-Deposition) auf der Metallisierung eines aus einem Kunststoff gefertigten Bedienelementes. Hierbei werden dünne Schichten in einem Vakuum abgeschieden. Das abzuscheidende Material liegt in fester Form vor. Das verdampfte Material bewegt sich durch die Vakuumkammer und trifft auf die zu beschichtenden Bauteile, wo es zur Schichtbildung kommt. Durch einen Laserprozess wird die gewünschte Symbolik eingebrannt bzw. die PVD Beschichtung partiell entfernt.

Zwar ist das PVD-Verfahren geeignet, die gewünschte Symbolik auf die Bauteile aufzubringen. Als problematisch hat sich jedoch erwiesen, dass die aus Metall erstellte Symbolik nicht ohne eine zusätzliche Schutzschicht eine hinreichende Festigkeit gegen Abrieb und Korrosion aufweist. Aus diesem Grund ist es erforderlich, eine Schutzschicht, beispielsweise aus Lack, aufzubringen. Durch diesen zusätzlichen Arbeitsgang erhöhen sich jedoch die Kosten erheblich.

Aus der DE 10 2006 042 269 A1 ist ein Verfahren zum galvanischen Beschichten von Bauteilen aus Kunststoffen bekannt, bei dem eine Symbolik aus galvanostabilem Lack mittels Thermotransferverfahren aufgedruckt wird. Aus der DE 20 2013 009 793 U1 ein galvanisch dekoriertes Bauteil mit einer in der Oberfläche durchleuchtbar eingebrachten Symbolik oder Struktur bekannt, bei dem die Symbolik auf das Bauteil aufgedruckt wird. Die DE 10 2011 104 018 A1 offenbart ein Verfahren zur Herstellung eines sichtseitig galvanisch beschichteten Kunststoffbauteils, bei dem eine die gewünschte Form und Farbe aufweisende Maskierung aus nicht galvanisierbarem Material auf eine transluzent galvanisierbare Folie aufgebracht wird.

Darüber hinaus sind Verfahren bekannt, bei denen die Bauteile galvanisch beschichtet werden. Dabei werden die Teile zunächst im Spritzgießverfahren, beispielsweise aus Butadien-haltigen Copolymerisaten wie ABS oder ABS/PC, hergestellt. Nach dem Spritzgieß-Vorgang werden die Bauteile galvanisch vorbehandelt, um eine dünne Metallschicht, in der Regel eine dünne Nickelschicht, zu erzeugen. Die Bauteile werden dann dem Galvanikprozess entnommen. Nach der Entnahme wird die galvanisierte Metallschicht bereichsweise mittels Laser entfernt. Die so behandelten Bauteile werden dann erneut dem Galvanikprozess zugeführt und die Abscheidung soweit fortgesetzt, bis die gewünschte Chromschicht gebildet ist. Die gelaserten Bereiche bilden dann die Symbolik aus.

Ein solches Verfahren beschreibt die EP 1 219 417 A2, bei dem von einer Transferfolie mittels Laser eine Strukturinformation auf die Oberfläche eines Druckformträgers aufgebracht wird. Die EP 1 188 560 A2 offenbart eine Thermotransferfolie sowie ein Verfahren zu deren Herstellung. Die DE 43 30 961 C1 bezieht sich auf ein Verfahren zur Herstellung von strukturierten Metallisierungen auf Oberflächen mittels Laserstrahl.

Zwar ist es mit den genannten Verfahren möglich, technisch und optisch qualitativ hochwertige Bedienelemente herzustellen. Das Verfahren weist jedoch den Nachteil auf, dass zum einen der zusätzliche Arbeitsgang des Laserns zur Erstellung der Symbolik die Kosten erhöht. Zum anderen sind bei dem vorgenannten Verfahren zwei Galvanisier-Prozesse erforderlich. Weiter liegen die Symboliken bis zum Kunststoffmaterial des Rohteils frei, was zu Problemen bei anschließender Berührung mit Kosmetika, besonders Sonnencremes führen kann, da die eingesetzten Kunststoffmaterialien nicht oder nur bedingt beständig sind. Insgesamt ist aufgrund der gegebenen Verfahrensabläufe das genannte Verfahren für Massenbauteile wenig geeignet.

Hier will die Erfindung Abhilfe schaffen. Der Erfindung liegt die Aufgabe zugrunde, ein Verfahren zur Herstellung eines galvanisch dekorierten Bauteils mit einer durch laseraktivierte Thermotransferbedruckung auf der Oberfläche aufgebrachten Symbolik, bevorzugt durchleuchtbar eingebrachten Symbolik oder Struktur, zu schaffen, bei dem das Bauteil aus einem galvanisierbaren Kunststoff im Spritzgießverfahren hergestellt wird, welches einerseits kostengünstig und auch für die Herstellung von Massenprodukten geeignet ist, andererseits auch ohne zusätzliche Behandlung die erforderliche Abriebfestigkeit der jeweiligen Bedienelemente bereitstellt.

Gemäß der Erfindung wird diese Aufgabe durch die Merkmale des Patentanspruchs 1 gelöst.

Unter Thermotransferverfahren werden Verfahren subsummiert, bei denen das gewünschte Druckbild durch partielle Hitzeerzeugung ohne größere mechanische Beeinflussung des Druckgutes erzeugt wird. Das entstehende Druckbild ist sehr haltbar und kann auf unterschiedlichsten Materialien zum Einsatz kommen. Im Gegensatz zu gängigen Thermotransferverfahren zur Erstellung von Bauteilen aus Kunststoff für die Automobilindustrie durch Heißprägen, bei dem der Übertrag des Lacksystems von dem Träger auf das Bauteil durch einen beheizten Stempel appliziert wird, findet gemäß der Erfindung der Übertrag des Lacksystems durch Wärmeeinbringung mittels eines Lasers statt.

Diese Applizierungsform hat den Vorteil, dass einmal sehr feine Konturen dargestellt werden können, welche beim Heißprägen mit einem Silikonstempel oder Metallstempel nicht darzustellen sind. Ein weiterer Vorteil bei dem beschriebenen Verfahren nach der Erfindung ist die erhöhte Flexibilität, da bei dem bekannten Verfahren mittels Heißprägen oft Ungenauigkeiten im Druckbild durch Neuanfertigung von unter Umständen mehreren neuen Stempeln korrigiert werden müssen, während bei der Technik gemäß der vorliegenden Erfindung zur Optimierung des Druckbildes lediglich die Programmierung des Lasers modifiziert werden muss. Darüber hinaus erfolgt bei dem erfindungsgemäßen Verfahren der Übertrag des Lacksystems von dem Träger auf das Bauteil quasi berührungslos, wodurch die von anderen Thermotransferverfahren bekannten mechanischen Beeinflussungen der zu bedruckenden Bauteile vermieden ist.

Mit der Erfindung ist ein Verfahren zur Darstellung von einer in einer galvanisch abgeschiedenen Oberfläche eingebrachten Symbolik oder Struktur in Bauteilen aus Kunststoff für die Automobilindustrie durch Galvanisierung geschaffen, welches im Vergleich zu den aus dem Stand der Technik bekannten Verfahren vorteilhaft und wesentlich kostengünstiger ist. Dies ist dadurch hervorgerufen, dass lediglich ein Galvanisier-Prozess erforderlich ist. Außerdem ist die Unterbrechung des Galvanikprozesses für das aus dem Stand der Technik bekannte Lasern der Bauteile nicht erforderlich, so dass die Galvanisierung in einem einzigen kontinuierlichen Vorgang vorgenommen werden kann. Hinzu kommt, dass mit dem erfindungsgemäßen Verfahren qualitativ hochwertige und auch den Anforderungen, beispielsweise gegen Abrieb und Medienbeständigkeit wie Kosmetika, entsprechende Bauteile herstellbar sind.

In Weiterbildung der Erfindung wird die Symbolik aus nicht galvanisierbarem Lack aufgebracht. Die Verwendung von Lacken hat einerseits den Vorteil, dass verschiedenste Lacke mit unterschiedlichen Eigenschaften und Farben zur Verarbeitung bereitstehen, andererseits mit den Lacken jegliche Formen für Symbole, Worte oder Zahlen abgebildet werden können.

Bevorzugt wird die Symbolik auf das Bauteil durch ein laseraktiviertes Thermotransferverfahren aufgedruckt. Diese Technik stellt ein einfaches Verfahren insbesondere bei Verwendung von nicht galvanisierbaren Lacken zur Erstellung der Symbolik dar und lässt sich zudem gut in den übrigen Verfahrensablauf integrieren.

In anderer Weiterbildung der Erfindung werden die übertragenden Druckbilder auch noch konturfolgend mit einem verbrennenden Laserstrahl bearbeitet. Zwar bedienen die übertragenden Druckbilder erfahrungsgemäß alle optischen Ansprüche; sie können jedoch noch konturfolgend mit einem verbrennenden Laserstrahl bearbeitet werden, um die Konturen der Symbole und Strukturen nachzubearbeiten und um Unregelmäßigkeiten im Druckbild an den Außenkanten der galvanisierten Bauteile zu entfernen.

Ein Ausführungsbeispiel der Erfindung ist in den Zeichnungen dargestellt und wird nachfolgend im Einzelnen beschrieben. Es zeigen:
- Figur 1: die schematische Darstellung eines galvanisierten Bauteils aus Kunststoff in Form eines Start/Stopp-Knopfes und
- Figur 2: das Ablaufdiagramm des erfindungsgemäßen Verfahrens.

Das als Ausführungsbeispiel dargestellte beschichtete Bauteil 1 zeigt ein aus Kunststoff gefertigtes Produkt für die Automobilindustrie mit anschließender Galvanisierung. Das Bauteil 1 weist nach Abschluss des Verfahrens eine Symbolik 2 auf, bei der es sich sowohl um Piktogramme als auch um Zahlen, Wörter oder dergleichen handeln kann.

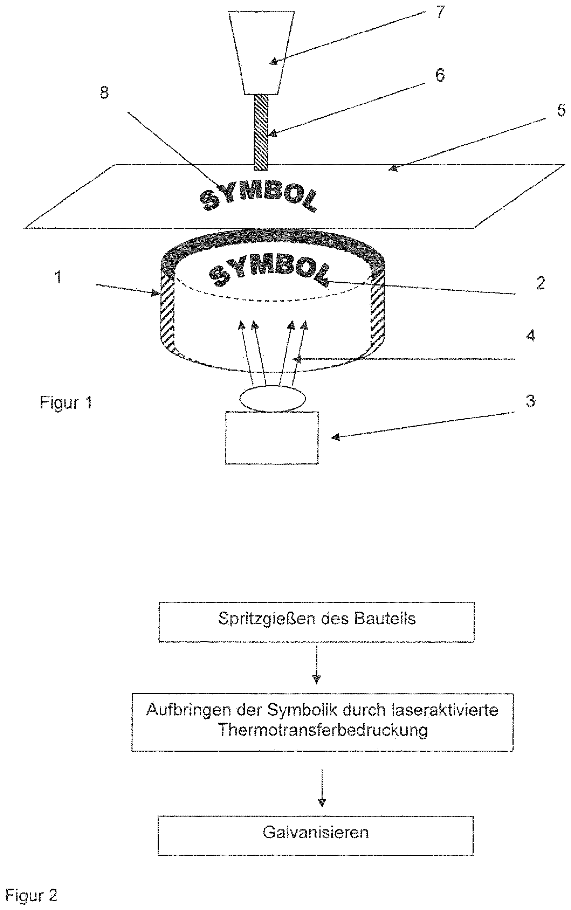

Im Ausführungsbeispiel nach Figur 1 ist ein Start/Stop-Knopf für ein Automobil beschrieben, mit dem der Motor des Automobils gestartet und abgestellt werden kann. Die Symbolik besteht in diesem Fall aus den Wörtern "Start", "Stop" und "Engine". Soweit es sich um andere Bedienelemente handelt, ist in der Regel die Symbolik in Form eines Piktogramms gebildet, beispielsweise die Darstellung eines Scheinwerfers, soweit es sich um ein Bedienelement für die Fahrzeugbeleuchtung handelt.

Bei dem Verfahren gemäß dem Ausführungsbeispiel nach Figur 2 wird zunächst das aus Kunststoff herzustellende Bauteil im Spritzgießverfahren hergestellt. Bei dem Kunststoff handelt es sich um einen galvanisierbaren Kunststoff, vorzugsweise um ABS oder ABS/PC. Es wird dann auf das Bauteil 1 ein Druckbild gemäß der späteren Symbolik 2 aufgebracht. Die Symbolik 2 ist dabei von einem nicht-galvanisierbaren Material gebildet. Vorzugsweise wird die Symbolik 2 aus nicht-galvanisierbarem Lack aufgebracht. Das Aufbringen der Symbolik 2 auf das Bauteil 1 erfolgt wie nachfolgend beschrieben:

Das Druckbild wird nach dem Spritzgießvorgangs des Bauteils 1 aufgebracht. Erfindungsgemäß wird das Druckbild 8 aus nicht-galvanisierbarem Lack auf einen Träger 5 aufgedruckt, bei dem es sich vorzugsweise um eine Folie handelt. Von dem Träger 5 wird das aufgedruckte Druckbild 8 durch Temperatureintrag durch Aktivierung eines Lasers 7 übertragen. Durch den dadurch erzeugten Laserstrahl, der in Figur 1 mit "6" bezeichnet ist, wird das Druckbild 8 von dem Träger 5 auf das Bauteil 1 übertragen. Gemäß einer nicht erfindungsgemäßen Variante kann die Symbolik 2 entsprechend dem Druckbild 8 auf dem Träger 5 ausgestaltet sein, so dass durch einen flächigen Temperatureintrag die Symbolik 2 auf dem Bauteil 1 abgebildet wird.

Erfindungsgemäß ist der Träger 5 jedoch komplett beschichtet, so dass die Symbolik 2 auf dem Bauteil 1 durch Abfahren des Druckbildes 8 durch den Laser 7 abgebildet wird. Nach dem Auskühlen des Bauteils ist die Symbolik 2 auf dem Bauteil 1 erhaben, da sich die die Symbolik darstellende Lage durch den Wärmeeintrag von dem Träger 5 auf dem Bauteil 1 ablegt und dort anhaftet. Die Dicke der aufgetragenen Schicht der Symbolik 2 auf dem Bauteil 1 beträgt dabei zwischen 1 µm und 15 µm.

Wie vorstehend ausgeführt, findet der Übertrag des nicht-galvanisierbaren Lacks auf das Bauteil nach dem Spritzgießvorgangs statt. Das Aufbringen des Lacks nach dem erfindungsgemäßen Verfahren beansprucht dabei weniger Zeit, als die Zeit, die beispielsweise zum Spritzen des Bauteils benötigt wird. Folglich kann der Vorgang in den Maschinenzyklus integriert werden, ohne die Zykluszeit zu verlängern. Die Beschichtung der Bauteile nach dem erfindungsgemäßen Verfahren kann in Folge dessen ohne Veränderung der Taktzeiten in bereits bestehende Herstellprozesse von gattungsgemäßen Bauteilen aus Kunststoff integriert werden.

Nach der Applizierung werden die Bauteile mit der die späteren Symbolik nachbildenden nicht galvanisierbaren Schicht der Galvanik zugeführt. Die Galvanisierung erfolgt in bekannter Weise durch chemisches und elektrochemisches Abscheiden mehrerer Metallschichten, die konventionell mit einer Dekorschicht aus Chrom abgeschlossen wird. Diese Metallschichten halten als Verbund auf den Bauteilen aus galvanisierbarem Kunststoff, insbesondere ABS bzw. ABS/PC, problemlos. Lediglich die mit dem Druckbild 8 versehenen Bereiche sind nicht mit Metall beschichtet, weil diese mit dem nicht-galvanisierbarem Lack bedeckt sind. Aufgrund des andersfarbigen Untergrunds des Bauteils 1 ist die Symbolik 2 erkennbar. Es besteht zudem die Möglichkeit, auch ein hinterleuchtetes Bauteil auf diese Weise herzustellen, indem die Rückseite metallfrei gehalten bzw. derart nachgearbeitet wird. Wie in Figur 1 dargestellt, können in diesem Fall von einer unter bzw. hinter dem Bauteil 1 angebrachten Lichtquelle 3 Lichtstrahlen 4 ausgesandt werden, die dann durch die nicht galvanisierte Symbolik 2 sichtbar sind, so dass die Kontur der Symbolik 2 auch bei Dunkelheit erkennbar ist. Die Symbolik 2 ist somit durchscheinend dargestellt.

## Patentansprüche

1. Verfahren zur Herstellung eines galvanisch dekorierten Bauteils (1) mit einer in der Oberfläche durchleuchtbar gestalteten, eingebrachten Symbolik (2) oder Struktur, bei dem das Bauteil (1) aus einem galvanisierbaren Kunststoff im Spritzgießverfahren hergestellt wird und die Symbolik (2) oder Struktur aus einem nicht galvanisierbaren, galvanikstabilen Druckbild (8) hergestellt wird, **dadurch gekennzeichnet, dass** das Druckbild (8) nach dem Spritzgießvorgang durch Aktivierung mittels eines Lasers (7) von einem Träger (5) auf das Bauteil (1) mittels Thermotransfer übertragen wird, wobei der Träger (5) komplett beschichtet ist, und die Symbolik (2) auf dem Bauteil (1) durch Abfahren des Druckbildes (8) durch den Laser (7) abgebildet wird und das Bauteil (1) danach galvanisiert wird.

## Claims

1. Method for producing a galvanically decorated component (1) with a symbol (2) or structure of a transilluminatable design incorporated in the surface, in which the component (1) is produced from an electroplatable plastic in an injection-moulding process, and the symbol (2) or structure is produced from a non-electroplatable, electroplating-resistant printed image (8), **characterised in that** after the injection-moulding process, the printed image (8) is transferred from a carrier (5) onto the component (1) using thermal transfer by being activated using a laser (7), wherein the carrier (5) is completely coated and the symbol (2) is produced on the component (1) by means of the laser (7) passing over the printed image (8) and the component (1) is subsequently electroplated.

## Revendications

1. Procédé de réalisation d'un élément (1) décoré par galvanisation, avec un symbole (2) ou une structure configuré(e) illuminable par transparence, incorporé(e) dans la surface, au cours duquel l'élément (1) est fabriqué selon un procédé de moulage injecté à partir d'une matière plastique galvanisable, et au cours duquel le symbole (2) ou la structure est fabriqué(e) à partir d'une image imprimée (8) non galvanisable stable à la galvanisation, **caractérisé en ce qu'**après l'opération de moulage injecté l'image imprimée (8) est transférée, par activation au moyen d'un laser (7), d'un support (5) vers l'élément (1) par le biais d'un transfert thermique, sachant que le support (5) est entièrement revêtu et que le symbole (2) est reproduit sur l'élément (1) par écriture de l'image imprimée (8) par le laser (7) et qu'ensuite l'élément (1) est galvanisé.
